# EUROPÄISCHE PATENTANMELDUNG

(11) **EP 0 896 831 A1**
(43) Veröffentlichungstag der Anmeldung: **17.02.1999**
(21) Anmeldenummer: 98111235.2
(22) Anmeldetag: 18.06.1998
(51) Int. Cl.: B01D 53/94, F01N 3/20

(54) **Vorrichtung und Verfahren zur katalytischen NOx-Reduktion in sauerstoffhaltigen Motorabgasen**

(30) Priorität: 09.08.1997 DE 19734627
(71) Anmelder: MAN Nutzfahrzeuge Aktiengesellschaft, 80976 München (DE)
(72) Erfinder: Eberhard, Jacob, Dr., 90607 Rückersdorf-Strengenberg (DE)

(57) **Zusammenfassung**

Zur katalytischen Reduktion von NOₓ in sauerstoffhaltigen Abgasen unter Verwendung von Harnstoff als Reduktionsmittel wird ein Kombinationsbauteil (6), bestehend aus Verdampfer, Gasmischer und Hydrolysekatalysator eingesetzt, dem durch Vorschaltung eines motornahen Vorkatalysators (3) und/oder durch Veränderung der katalytischen Beschichtung des Kombinationsbauteils (6) - zusätzlich zur Verdampfung, Strömungsmischung und katalytischen Hydrolyse - eine signifikante NOₓ-Reduktionsaktivität aufgeprägt wird, womit der dem Kombinationsbauteil (6) nachgeschaltete Reduktionskatalysator (7) entlastet oder vollständig ersetzt wird.

## Beschreibung

Die Erfindung betrifft eine Vorrichtung zur katalytischen NOₓ-Reduktion in sauerstoffhaltigen Abgasen unter Anwendung von Harnstoff, mit einem in einer Abgasleitung enthaltenen Reduktionskatalysator sowie einem Harnstoffbehälter, der mittels einer Zufuhreinrichtung mit dem Abgasstrom verbunden ist, wobei die Zufuhreinrichtung eine Sprühdüse aufweist, mit der eine flüssige Lösung von Harnstoff in Wasser oder ein Aerosol aus Harnstoffstaub und Luft (EP 0615 777 A1) auf einen Verdampfer, der als Strömungsmischer und Hydrolysekatalysator ausgebildet ist, fein versprüht werden kann.

Die Verwendung von Harnstoff als Reduktionsmittel und eines Verdampfers, der als Strömungsmischer und Hydrolysekatalysator ausgebildet ist, ist in der EP 0487 886 B1 (Priorität vom 29.11.1990) und in der EP 0 555 746 A1 (Priorität vom 10.02.1992) der Anmelderin beschrieben.

Der Erfindung liegt die Aufgabe zugrunde, die Vorrichtung gemäß EP 0555 746 A1 dahingehend weiter zu entwickeln, daß daraus eine für den Fahrzeugeinbau notwendige weitere Verringerung des Raumbedarfs oder/und eine räumlich günstigere Aufteilung der Funktionsbausteine der Abgasnachbehandlungseinrichtung resultiert. Gleichzeitig soll der Arbeitstemperaturbereich der NOₓ-Konvertierung erweitert und die Temperaturstabilität des Katalysatorsystems angehoben werden. Ziel ist die Absenkung der unteren Arbeitstemperaturgrenze von bisher 250 auf ca. 150/C und die Anhebung der oberen Temperaturgrenze von 550 auf ca. 650/C.

Die Aufgabe wird erfindungsgemäß mit den Merkmalen des Hauptanspruches gelöst.
Gemäß dem Hauptanspruch der Erfindung werden die in den Unteransprüchen ausgeführten Maßnahmen ergriffen, um dem Verdampfer, der als Strömungsmischer und Hydrolysekatalysator ausgebildet ist, zusätzlich NOₓ-Reduktionsaktivität anzuerziehen, um damit den nachgeschalteten NOₓ-Reduktionskatalysator zu entlasten, der damit in seiner Baugröße wesentlich reduziert werden kann. Damit kann den spezifischen Einbauverhältnissen bei Fahrzeugen besser entsprochen werden. Hierbei sollte in Betracht gezogen werden, da8 die Verdampfung, Vermischung und Hydrolyse des Harnstoffs im Abgasstrom einen gewissen Mindestplatzbedarf erfordert, so daß die Möglichkeiten der Reduzierung der Baugröße des Verdampfers sehr begrenzt sind.

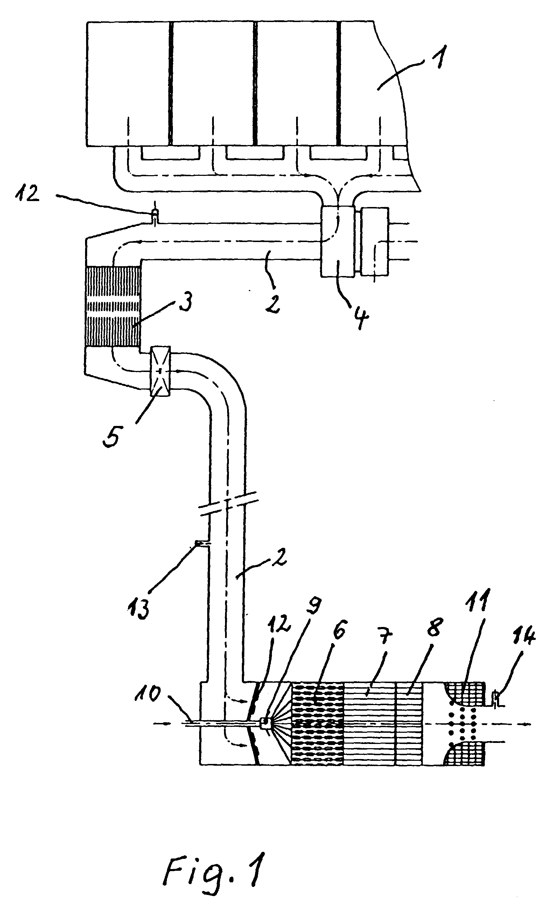

Gemäß der Ausgestaltung der Erfindung, Figur 1, wird die katalytische Reaktivität des NOₓ gegenüber NH₃ durch die teilweise katalytische Oxidation des NO zu NO₂ an einem Vorkatalysator, der in Strömungsrichtung vor der Zufuhreinrichtung für Harnstoff angeordnet ist, angehoben. Als NO-Oxidationskatalysator wird in der in EP 0 283 913 A2 beschriebenen Weise ein Al₂O₃-getragener Platinkatalysator mit hoher Pt-Beladung eingesetzt. In der EP 0 283 913 A2 wird beschrieben, daß durch Vorschaltung dieses Katalysators vor einem Reduktionskatalysator auf Basis V₂O₅/TiO₂ dessen bereits vorhandene hohe Reduktionsaktivität weiter angehoben werden kann. Überraschenderweise wurde nun gefunden, daß die Harnstoffverdampfereinrichtung, deren Oberfläche mit einer Abmischung aus V₂O₅-freien Oxiden beschichtet und deren Reduktionsaktivität unterhalb 500/C nach der EP 0555 746 vernachlässigbar ist durch die Beaufschlagung mit NOₓ, dessen NO₂-Gehalt von 3-10% auf 30-70%, vorzugsweise 50%,mit dem vorgeschalteten Oxidationskatalysator angehoben wurde, eine signifikante NOₓ-Reduktionsaktivität erzeugt wird.

In einer weiteren Ausgestaltung der Erfindung werden zur katalytischen Beschichtung der Verdampfereinrichtung Mischoxide herangezogen, die auch ohne vorgeschalteten NO-Oxidationskatalysator eine Erhöhung und mit Vorkatalysator eine zusätzliche Erhöhung der NOₓ-Reduktionsaktivität ermöglichen. Es sind dies Abmischungen von TiO₂ mit 3-25 Gew.-% Al₂O₃,La₂O₃, SiO₂ oder/und ZrO₂, die zusätzlich 5-25 Gew.-% WO₃, Nb₂O₅ oder/und Ta₂O₅ und 0,05 - 5 Gew.-% Vanadiumpentoxid, V₂O₅, enthalten können und Abmischungen aus mindestens drei, vorzugsweise vier verschiedenen Oxiden enthalten. Einige Beispiele sind in Tabelle 1 zusammengestellt. Im Gegensatz zu dem in der EP 0 283 913 A2 beschriebenen Zweikomponentenoxid V₂O₅/TiO₂ (Vergleichsbeispiel Tab. 1) sind die erfindungsgemäßen Abmischungen bei Abgastemperaturen über 450/ C thermisch beständig. Für die Anwendung der NOₓ-Reduktion im Dieselabgas ist eine Temperaturbeständigkeit der Katalysatoren bis 650/C erforderlich. Diese Beständigkeit wird von den Katalysatorbeschichtungsmassen I bis VII gezeigt, die ihre hohen BET-Oberflächen von >75 m5/g bei 650/C behalten, während beim Vergleichskatalysator unter diesen Bedingungen die BET-Oberfläche auf 5m5/g zurückgeht (Tabelle 1).

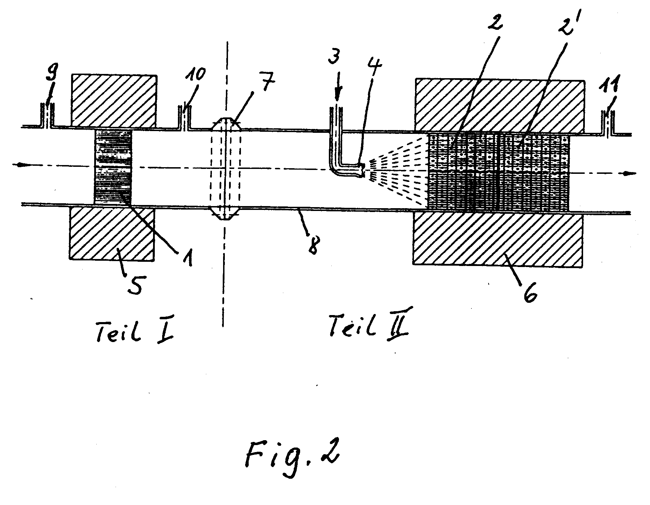

### Die Ausführungsbeispiele 1 - 5 und das Vergleichsbeispiel 1 sind das Ergebnis von Modellgasuntersuchungen in einer Testapparatur, die in Figur 2 dargestellt ist.

### Ausführungsbeispiel 1:

Die Versuchseinrichtung für Modellgasuntersuchungen ist in Fig. 2 gezeigt. In Teil 1 der Versuchseinrichtung befindet sich in einem heizbaren Quarzrohr 8 mit NW 38 eine Keramikwabe 1 mit 400cpsi - Zellteilung, beschichtet mit von stabilisiertem Al₂O₃- getragenem Platinoxid,PtOₓ, 50g Pt/ft;,Hersteller: Degussa, Typ ND 99 (Vorkatalysator). Der Vorkatalysator 1 wird mit einem Modellgas der Zusammensetzung entsprechend Abgas A (Tabelle 2) bei 300/C und einer Raumgeschwindigkeit von 60.000 h⁻¹ beaufschlagt. Nach dem Vorkatalysator vor Eintritt in den Teil II des Reaktors wird die Zusammensetzung von Abgas B (Tabelle 2) festgestellt.

Im Teil 2 befindet sich die Zuführung für eine Harnstoffwasserlösung 3 mit einer Sprühdhse 4 und der Verdampfer für Harnstoff, ausgebildet als Strömungsmischer und Hydrolysekatalysator 2,2' ebenfalls in einem Quarzrohr 8 mit NW 38 in der Ausführung als geschlitzter Metallträger , Hersteller: Emitec Typ SQ ,heizbar auf Temperaturen zwichen 200 und 600/C. Die Raumgeschwindigkeit beträgt bei den beiden hintereinandergeschalteten Waben 2 und 2' 15.000 und 30.000 h⁻¹ bei der Wabe 2.

### Ausführungsbeispiel 2:

Der Verdampfer (2, 2') wird nach EP 0 487 886 B1 und EP 0 555 746 A1 mit einer Abmischung aus TiO₂, Al₂O₃, SiO₂ und/oder WO₃ beschichtet (Tabelle 1: Katalysatorbeschichtungsmassen I - III) und in den Reaktor Teil II eingebaut. Nach Beaufschlagung des Verdampfers mit Modell-Abgas A werden bei 200-600/C die in der Tabelle 3(RG 15.000h⁻¹) und Tabelle 4 (RG 30.000h⁻¹) aufgelisteten NOₓ-Konvertierungsraten registriert.

### Ausführungsbeispiel 3:

Durch Vorschalten des Reaktorteils I wird ein Modellabgas mit der Zusammensetzung B erzeugt und zusammen mit dem eingedüsten Harnstoff über den Verdampfer (2, 2') geleitet. Die gemessenen Konvertierungsraten sind in den Tabellen 3 und 4 aufgelistet.

### Ausführungsbeispiel 4:

Der Verdampfer 2, 2' wird mit Mischoxiden der Zusammensetzung IV (Hersteller: Rhone-Poulenc), V und VI ( hergestellt aus dem Mischoxid mit der Zusammensetzung III von Rhone-Poulenc durch Imprägnieren mit den berechneten Mengen Ammoniumvanadatlösung, Trocknen und 2h Kalzinieren bei 700/C), VI (hergestellt durch Imprägnieren des Mischoxids mit der Zusammensetzung IV von Rhone-Poulenc mit der berechneten Menge Ammoniumvanadatlösung, Trocknen und 2h Kalzinieren bei 700/C ) beschichtet und in Teil II des Reaktors, Figur 2, eingebaut. Nach Beaufschlagung des Verdampfers mit Modell-Abgas A und Eindüsung von Harnstoff werden bei 200-600/C NOₓ-Konvertierungsraten gemessen, die in den Tabellen 3 und 4 wiedergegeben sind.

### Ausführungsbeispiel 5:

Durch Vorschalten des Reaktorteils I wird ein Modellabgas mit der Zusammensetzung B erzeugt und dieses bei gleichzeitiger Eindüsung von Harnstoff über den Verdampfer 2, 2' geleitet, der mit Mischoxiden nach Ausführungsbeispiel 4 beschichtet ist. Die gemessenen NOₓ-Konvertierungsraten sind in der Tabelle 3 gezeigt. Wird nur der Verdampfer 2 eingesetzt, verdoppelt sich die Raumgeschwindigkeit und es werden die in Tabelle 4 aufgelisteten NOₓ-Konvertierungsraten erreicht.

### Vergleichsbeispiel 1:

Der Verdampfer 2,2' wird gemäß EP 0 283 913 A2 mit einem Mischoxid, bestehend aus 95% TiO₂ und 5% V₂O₅ beschichtet und bei 700/C 2h kalziniert. Weder mit Abgas A oder B konnte eine NOₓ-Konvertierung >10% zwischen 200 und 600/C festgestellt werden. Die BET-Oberfläche des V₂O₅/TiO₂ -Mischoxids betrug nach der Kalzinierung lediglich 5 m5/g und das Porenvolumen war auf <10% vermindert. Vergl. Tab. 1.

Die Ergebnisse der Modellgasversuche zeigen das die erfindungsgemäßen Ausführungen generell höhere NOₓ-Reduktionsaktivitäten bei Temperaturen unter 300 und über 500°C besitzen, verglichen mit dem Stand der Technik.

Die Ausführungsbeispiele 6 und 7 und das Vergleichsbeispiel 2 sind das Ergebnis von Untersuchungen im realen Dieselabgas an einem Motorenprüfstand, dessen Aufbau schematisch in Figur 1 wiedergegeben ist. Die Meßergebnisse sind in Tabelle 5 zusammengestellt.

### Ausführungsbeispiel 6:

Zur Abgaserzeugung dient ein 12-Sechszylinder-Dieselmotor in Euro 2-Aus-führung, Typ MAN 2866 LF20. Der eingesetzte Dieselkraftstoff hatte einen Schwefelmassenanteil von 50 ppm. Der Betrieb des Motors erfolgte im 13-Stufentest nach 88/77/EWG. Die NOₓ-Emission des Motors betrug 6,6 g/kWh und der max. Abgasvolumenstrom 1450 Nm;/h.

Als Reduktionsmittel wurde eine 32,5%ige Lösung von Harnstoff in Wasser mit der in der EP 0 555 746 A1 in Figur 1 gezeigten Einrichtung zur NOₓ-Reduktion aufgesprüht.

Im Rahmen von Ausführungsbeispiel 6 wurde in 3 Ausführungsformen jeweils ein Vorkatalysator 3 und ein Verdampfer 6 eingesetzt, siehe Tabelle 5. Als Ergebnis der Abgasnachbehandlung wurde bei dem System 6/1 eine NOₓ-Konvertierung von 38% erreicht.

Im Ausführungsbeispiel 6/2 wurde dem System 6/1 ein Reduktionskatalysator 7 (Degussa Typ S11 mit V₂O₅ und WO₃ als Aktivkomponenten) mit 12 l Volumen nachgeschaltet. Damit konnte die NOₓ-Konvertierung auf 65% erhöht werden. Im Beispiel 6/3 wurde zusätzlich ein NH₃-Sperrkatalysator 8 angefügt und damit bei vernachlässigbar keinem NH₃-Schlupf der NOₓ- Umsatz auf 70% gesteigert.

### Ausführungsbeispiel 7:

Es wurden bis auf die Beschichtung des Verdampfers mit Ausführungsbeispiel 6 identische Versuchsbedingungen eingehalten.

Der Verdampfer 6 wurde zusätzlich mit 10 Gew.-% WO₃ imprägniert, indem die Beschichtung vom Typ H 02 (Degussa), bestehend aus Mischoxiden im System TiO₂/SiO₂/Al₂O₃ mit 180g/l Beladung mehrmals mit einer wässrigen Lösung von Ammoniumwolframat behandelt und bei 700/C 2h kalziniert, bis die Washcoatbeladung auf 200g/l angestiegen war. Die Ergebnisse in Tabelle 5 zeigen einen deutlichen Anstieg der NOₓ-Konvertierung im Vergleich zum Beispiel 6.

### Vergleichsbeispiel 2:

Die Tests wurden ohne Vorkatalysator ausgeführt. Die Ergebnisse in Tabelle 5 zeigen, daß ohne Vorkatalysator die NOₓ-Konvertierungsraten deutlich geringer ausfallen. Im Vergleichsbeispiel 2/3 werden insgesamt 54l Kat.-Volumen benötigt um die gleiche NOₓ-Konvertierung zu realisieren, wie beim Ausführungsbeispiel 2/3 mit einem Kat.volumen von 38l.

### Ausführungsbeispiel 8:

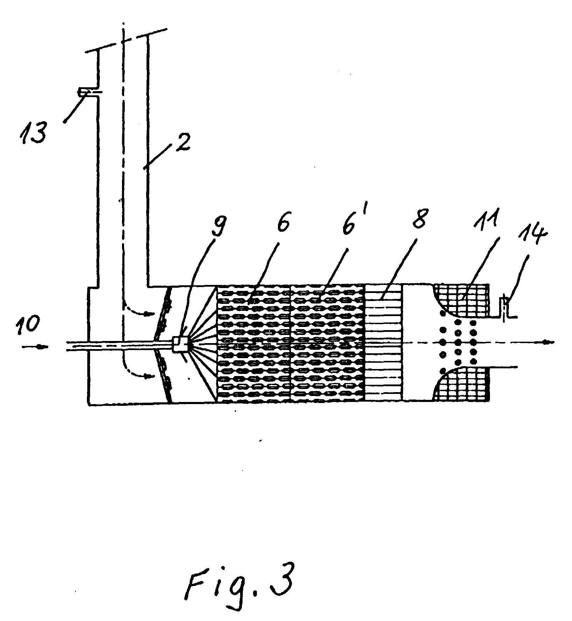

Die Komponenten dieses Nachbehandlungssystems sind in Tabelle 6 zusammengestellt. In allen Varianten wurde ein Vorkat 3 eingesetzt und auf einen Reduktionskatalysator 7 verzichtet. Die Beschichtung des Verdampfers 6 ist identisch mit der im Ausführungsbeispiel 7 eingesetzten Beschichtung. In der Variante 1 wurde das Volumen des Verdampfers 6 von 12l auf 24l verdoppelt (Figur 3) und eine NOₓ-Konvertierung (Tabelle 6) erreicht, die etwas höher liegt, als im Ausführungsbeispiel 7, Variante 2, mit Einsatz eines Reduktionskatalysators ermittelt wurde. Bei Nachschaltung eines NH₃-Sperrkats kann in der Variante 3 das Volumen des Verdampfers 6 auf 18l reduziert werden. Trotzdem wird noch eine NOₓ-Konvertierung von 80% erreicht (Tabelle 6). Mit diesem Ausführungsbeispiel wird gezeigt, daß in einem System zur katalytischen NOₓ-Reduktion mit Harnstoff als Reduktionsmittel vorteilhaft allein durch einen entsprechend ausgestalteten Verdampfer 6 die erforderliche NOₓ-Reduktionsaktivität erbracht werden kann.

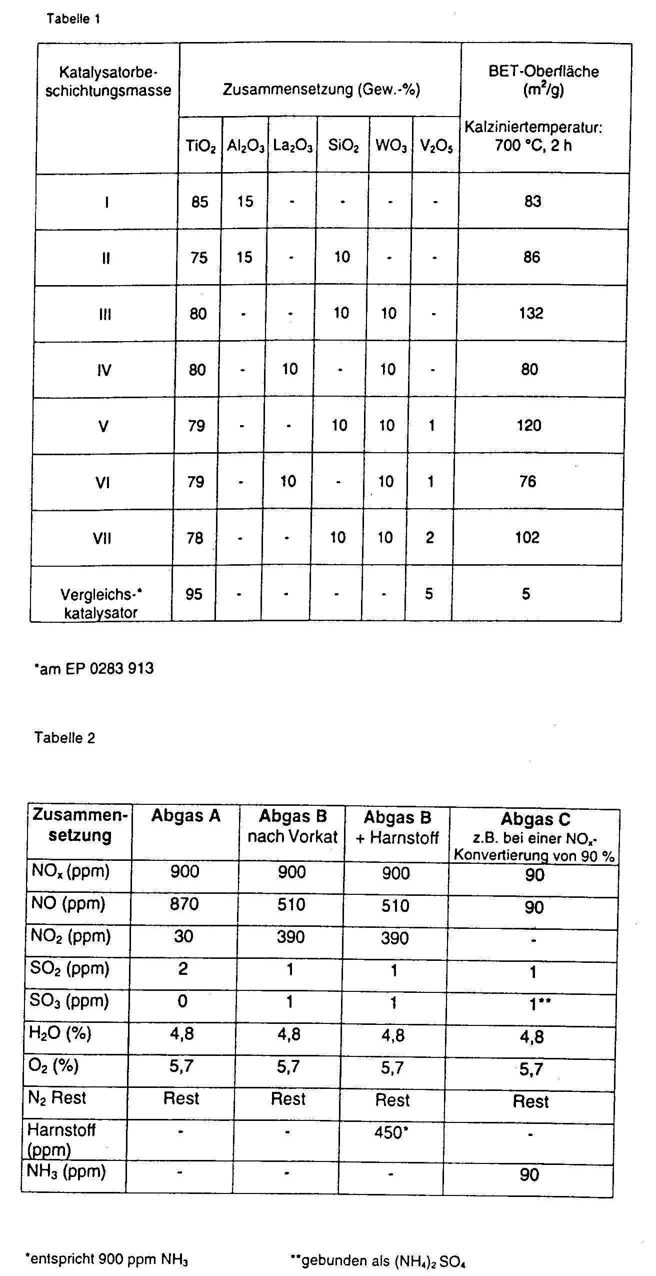

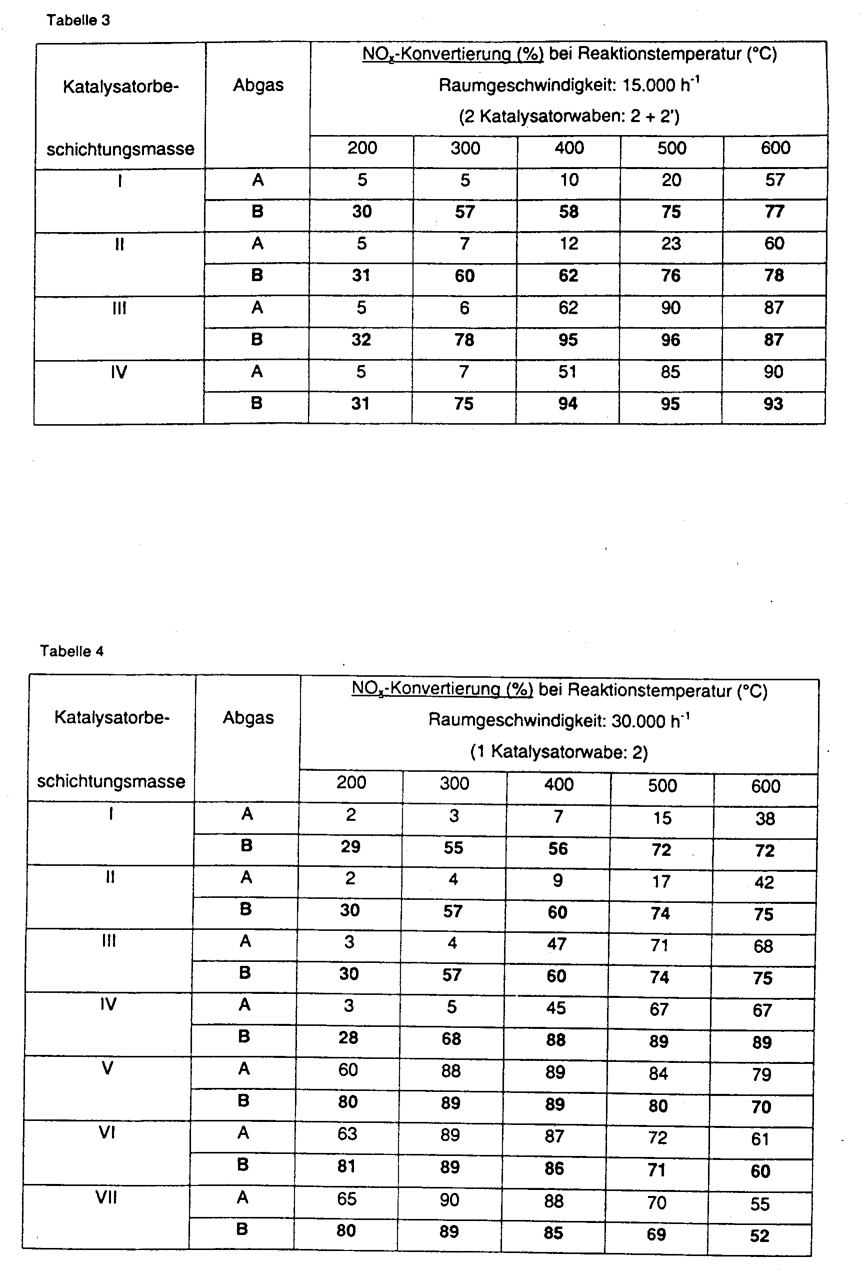

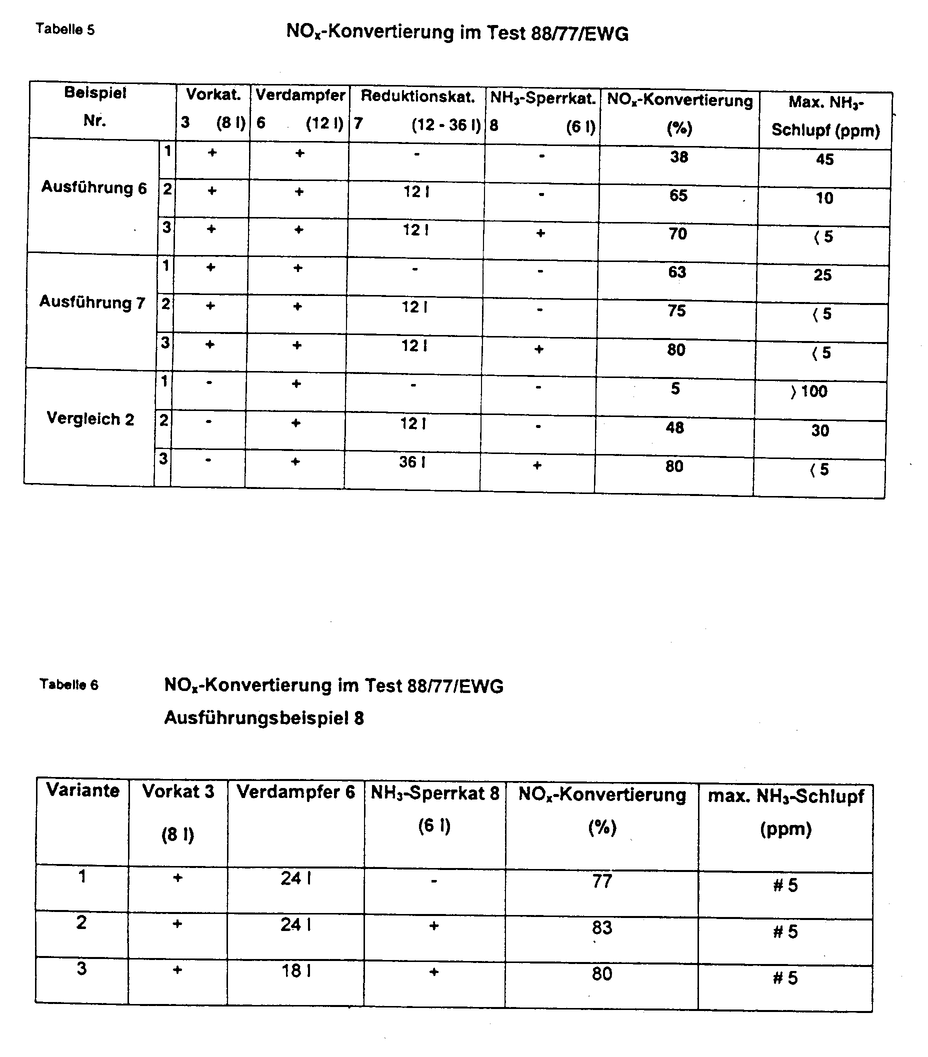

### Legende Fig. 1

- 1: Dieselmotor MAN D 2876 LF 20 (400 PS)
- 2: Abgasleitung
- 3: NO-Oxidationskatalysator Degussa ND 99 50 g Pt/ft³, 400 cpsi, Volumen: 8 l
- 4: Abgasturbolader
- 5: Abgasklappe
- 6: Verdampfer, ausgebildet als Strömungsmischer und Hydrolysekatalysator, Degussa H 02 TiO₂/SiO₂/Al₂O₃, 150 cpsi, Träger: Emitec SQ Volumen: 12 l
- 7: Reduktionskatalysator (optional)
- 8: NH₃-Sperrkatalysator (optional)
- 9: Harnstoffsprühdüse,
- 10: Zuleitung für Harnstoffwasser-Preßluft-Aerosol
- 11: Schalldämpfer
- 12: Meßstutzen für Abgas A
- 13: Meßstutzen für Abgas B
- 14: Meßstutzen für Abgas C

### Legende Fig. 2

- 1: NO-Oxidationskatalysator Degussa DN 99, 400 cpsi 50 g Pt/ft³, RG 60.000 h⁻¹
- 2: Verdampfer/Mischer/Hydrolysekatalysator (Emitec SQ-Träger, 150 cpsi) mit Beschichtungen 150 - 200 g/l der Zusammensetzung gemäß Tabelle 1 RG 30.000 h⁻¹
- 2': wie 2 für RG 15.000 h⁻¹ (2 + 2' hintereinandergeschaltet)
- 3: Harnstoffwasser-Luft-Aerosol-Zufuhr
- 4: Sprühdüse
- 5: Ofen (300 °C)
- 6: Ofen (200 - 600 °C)
- 7: Flanschverbindung
- 8: Quarzrohr
- 9: Meßstutzen für Abgas A
- 10: Meßstutzen für Abgas B
- 11: Meßstutzen für Abgas C

### Legende Fig. 3

- 6: Verdampfer, ausgebildet als Strömungsmischer und Hydrolysekatalysator, Degussa H 02 TiO₂/SiO₂/Al₂O₃, 150 cpsi, Träger: Emitec SQ Volumen: 12 l
- 6': dto. 12 l (Varianten 1 und 2), 6 l (Variante 3)
- 8: NH₃-Sperrkatalysator (Varianten 2 und 3))
- 9: Harnstoffsprühdüse
- 10: Zuleitung für Harnstoffwasser-Preßluft-Aerosol
- 11: Schalldämpfer
- 13: Meßstutzen für Abgas B
- 14: Meßstutzen für Abgas C

## Patentansprüche

1. Vorrichtung zur katalytischen NOₓ-Reduktion in sauerstoffhaltigen Motorabgasen unter Anwendung von Harnstoff als Reduktionsmittel, mit einem in der Abgasführung enthaltenen Reduktionskatalysator (7) und einem bekannten Verdampfer (6), der als Strömungsmischer und Hydrolysekatalysator ausgebildet ist und in dem Harnstoff zu Ammoniak (NH₃) und (CO₂) hydrolysiert wird, wobei die Oberfläche des Verdampfers (6) mit einer Abmischung aus Titandioxid TiO₂, Aluminiumoxid Al_{z}O₃, Siliciumoxid SiO₂, Zirkondioxid ZrO₂, Diniobpentoxid Nb₂O₅, Ditantalpentoxid Ta₂O₅, Wolframtrioxid WO₃ und/oder H-Zeolithe beschichtet ist, dadurch gekennzeichnet, daß dem Verdampfer (6) zusätzlich zur Strömungsmischung und katalytischen Hydrolyseaktivität, eine signifikante NOₓ-Reduktionsaktivität aufgeprägt ist, um damit den nachgeschalteten Reduktionskatalysator (7) zu entlasten oder vollständig zu ersetzen und einen Arbeitstemperaturbereich der NOₓ-Reduktion von 150-650°C zu schaffen.

2. Vorrichtung nach Anspruch 1, dadurch gekennzeichnet, daß vor der Zufuhreinrichtung für Harnstoff (9, 10) und vor dem Verdampfer (6) ein motornah angeordneter NO-Oxidationskatalysator (3) als Vorkatalysator (3) vorgesehen ist, um die Reaktivität des NOₓ durch Erhöhung des NO₂-Anteils, das im Rohabgas des NOₓ mit 3-10% vorhanden ist, auf 30 .... 70% anzuheben und dadurch mit dem Verdampfer (6) eine signifikant verbesserte katalytische NOₓ-Reduktionsaktivität zu erzeugen.

3. Vorrichtung nach Anspruch 1 und 2, dadurch gekennzeichnet, daß zur katalytischen Beschichtung des Verdampfers (6) Mischoxide in einer Abmischung von TiO₂ mit 3-25Gewichts-% Al₂O₃, La₂O₃, SiO₂ oder/und ZrO₂, die zusätzlich 5-25% Gew.-% WO₃, Nb₂O₅ oder/und Ta₂O₅ und 0,05-5% Vanadiumpentoxid V₂O₅, enthalten können, herangezogen werden, die auch ohne Vorkatalysator eine deutliche Erhöhung der NOₓ-Reduktionsaktivität ermöglichen.

4. Vorrichtung nach den Ansprüchen 1 und 2, dadurch gekennzeichnet, daß zur katalytischen Beschichtung des Verdampfers (6) Mischoxide in einer Abmischung von TiO₂ mit 3-25Gewichts-% Al₂O₃, La₂O₃, SiO₂ oder/und ZrO₂, die zusätzlich 5-25% Gew.-% WO₃, Nb₂O₅ oder/und Ta₂O₅ und 0,05-5% Vanadiumpentoxid V₂O₅, enthalten können, herangezogen werden, die mit Vorkatalysator eine deutliche Erhöhung der NOₓ-Reduktionsaktivität ermöglichen.

5. Vorrichtung nach Anspruch 3 und 4, dadurch gekennzeichnet, daß die Mischoxide für die katalytischen Beschichtungen des Verdampfers eine BET-Oberfläche von 20-200 m²/g besitzen, die bei Temperaturen bis 650°C stabil bleiben.

6. Vorrichtung nach den Ansprüchen 4 und 5, dadurch gekennzeichnet, daß die Mischoxide für die katalytischen Beschichtungen des Verdampfers ein Porenvolumen von 15-60% besitzen, und bei Temperaturen bis 650°C stabil bleiben.

7. Verfahren zur katalytischen NOₓ-Reduktion in sauerstoffhaltigen Motorabgasen unter Anwendung von Harnstoff als Reduktionsmittel, dadurch gekennzeichnet, daß die Beschichtung des Verdampfers (6) so ausgebildet ist, daß dem Verdampfer (6) eine signifikante NOₓ-Reduktionsaktivität aufgeprägt ist, um einen nachgeschalteten Reduktionskatalysator (7) zu entlasten oder vollständig zu ersetzen und einen Arbeitstemperaturbereich der NOₓ-Reduktion von 150 bis 650°C zu schaffen.

8. Verfahren zur katalytischen NOₓ-Reduktion in sauerstoffhaltigen Abgasen unter Anwendung von Harnstoff als Reduktionsmittel, dadurch gekennzeichnet, daß ein NO-Oxidationskatalysator (3) als Vorkatalysator (3) nach der Abgasturbine (4) und vor der Stelle der Harnstoffeintragung (9, 10) angeordnet ist, die Reaktivität des NOₓ durch Erhöhung des NO₂-Anteils im Rohabgas erhöht und damit die NOₓ-Reduktionsaktivität im nachgeschalteten Verdampfer (6) dessen Beschichtung aus einer Abmischung aus Titandioxid TiO₂, Aluminiumoxid Al₂O₃, Siliciumoxid SiO₂, Zirkondioxid ZrO₂, Diniobpentoxid Nb₂O₅, Ditantalpentoxid Ta₂O₅, Wolframtrioxid WO₃ und/oder H-Zeolithe besteht, wesentlich erhöht.

9. Verfahren zur katalytischen NOₓ-Reduktion in sauerstoffhaltigen Abgasen unter Anwendung von Harnstoff als Reduktionsmittel, dadurch gekennzeichnet, daß die Beschichtung des Verdampfers (6) aus Mischoxiden in einer Abmischung von TiO₂ mit 3-25Gewichts-% Al₂O₃, La₂O₃, SiO₂ oder/und ZrO₂, die zusätzlich 5-25% Gew.-% WO₃, Nb₂O₅ oder/und Ta₂O₅ und 0,05-5% Vanadiumpentoxid V₂O₅, enthalten können, besteht, und daß ohne Vorkatalysator (3) und ohne Reduktionskatalysator (7) und unter Hinzufügen eines weiteren Verdampfers (6'), der die gleiche Beschichtung wie Verdampfer (6) hat, eine deutliche Erhöung der NOₓ-Reduktionsaktivität erreicht wird.
